Europäisches Patentamt

European Patent Office

Office européen des brevets

(19)

(11) Veröffentlichungsnummer: **0 089 563**
A2

(12) **EUROPÄISCHE PATENTANMELDUNG**

(21) Anmeldenummer: **83102380.9**

(22) Anmeldetag: **11.03.83**

(51) Int. Cl.³: **F 16 K 37/00**

(30) Priorität: 23.03.82 DE 3210550

(43) Veröffentlichungstag der Anmeldung:
28.09.83 Patentblatt 83/39

(84) Benannte Vertragsstaaten:
CH DE FR GB LI

(71) Anmelder: Leybold-Heraeus GmbH
Bonner Strasse 504 Postfach 51 07 60
D-5000 Köln 51(DE)

(72) Erfinder: Contzen, Franz-Peter
Erlenweg 69
D-5000 Köln 30(DE)

(74) Vertreter: Leineweber, Jürgen
Leybold-Heraeus GmbH Bonner Strasse 504 Postfach 51
07 60
D-5000 Köln 51(DE)

(54) Ventilbetätigungsvorrichtung, vorzugsweise für Vakuumventile.

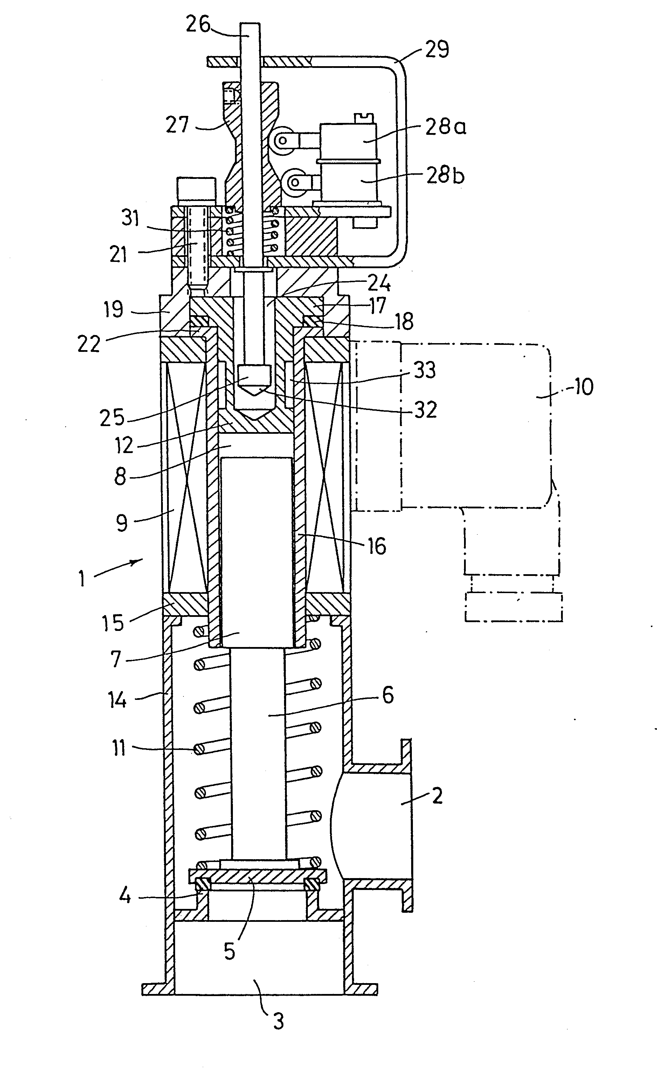

(57) Bei einer Ventilbetätigungsvorrichtung, vorzugsweise
für elektromagnetisch betätigbare Vakuumventile, mit einer
Spule (9) und einem in seinem Ankerraum (8) hin- und
herbewegbaren Anker (7), der mit dem Verschlußglied (5) in
Verbindung steht, ist der Spule (9) ein zweiter, der Stellungsanzeige des Ventils dienender Anker (25) zugeordnet, (Zeichnung 1/1)

EP 0 089 563 A2

./...

LEYBOLD-HERAEUS GMBH
Köln-Bayental

Ventilbetätigungsvorrichtung, vorzugsweise für
Vakuumventile

Die Erfindung bezieht sich auf eine Ventilbetätigungsvorrichtung, vorzugsweise für elektromagnetisch betätigbare Vakuumventile, mit einer Spule und einem in seinem
Ankerraum hin- und herbewegbaren Anker, der mit dem Verschlußglied in Verbindung steht.

Bei der Verwendung von fernbetätigten Vakuumventilen in
Anlagen ist es häufig notwendig, die Ventilstellung elektrisch anzuzeigen oder bei sich ändernder Ventilstellung
durch Betätigung von Mikroschaltern Steuerungsvorgänge
auszulösen.

Aus der DE-AS 11 16 006 ist eine Vorrichtung zur Stellungsanzeige bei gekapselten bzw. schwer zugänglichen Absperreinrichtungen bekannt. Diese umfaßt eine an der Armatur
angeformte, nach außen abgeschlossene Hülse, in der ein mit
der Schieberbewegung gekoppelter ferritischer Kern
verschiebbar angeordnet ist. Außerhalb der Hülse befinden
sich mehrere Spulenpaare, in denen der ferritische Kern
entsprechend seiner Eindringtiefe unterschiedliche Ströme
bewirkt und dadurch Anzeigevorrichtungen zum Ansprechen
bringt. Diese vorbekannte induktiv arbeitende Stellungsanzeige ist unabhängig von der Betätigungsvorrichtung für
die zu überwachende Absperreinrichtung, was den Nachteil
einer Mehrzahl zusätzlicher Bauteile und deshalb eines
erhöhten Kostenaufwandes hat.

Der vorliegenden Erfindung liegt die Aufgabe zugrunde, eine
Ventilbetätigungsvorrichtung, vorzugsweise für elektromagnetisch betätigbare Vakuumventile, mit einer Spule und einem in seinem Ankerraum hin- und herbewegbaren Anker, der mit dem Verschlußglied in Verbindung steht, mit einer einfachen Stellungsanzeige auszurüsten.

Erfindungsgemäß wird diese Aufgabe dadurch gelöst, daß der Spule ein zweiter, der Stellungsanzeige des Ventils dienender Anker zugeordnet ist. Bei einer in dieser Weise ausgebildeten Ventilbetätigungsvorrichtung erfolgt die Stellungsanzeige mit Hilfe des gleichen Magnetfeldes, mit dem auch die Ventilbetätigung bewirkt wird. Gesonderte Spulenbauteile sind nicht mehr erforderlich.

Vorteilhafterweise ist die erfindungsgemäße Ventilbetätigungsvorrichtung derart ausgebildet und bemessen, daß bei einer Erregung der Spule der zweite Anker nur dann angezogen wird, wenn auch der erste Anker angezogen worden ist. Durch diese Maßnahme ist sichergestellt, daß eine Betätigung der Stellungsanzeige nur dann erfolgt, wenn eine Ventilbetätigung vorhergegangen ist. Eine Fehlanzeige ist ausgeschlossen.

Eine vorteilhafte Weiterbildung besteht darin, daß der Ankerraum des zweiten Ankers von außen her zugänglich und vom Ankerraum des ersten Ankers durch eine Wandung abgetrennt ist. Durch diese Maßnahme wird der Einsatz der erfindungsgemäß betätigten Stellungsanzeige auch bei vollkommen gekapselten Ventilen möglich. Unter "vollkommen gekapselte Ventile" sollen hier solche Ventile verstanden werden, die auch keine Federbalgabdichtungen mehr aufweisen. Bei Ventilen dieser Art kann die die Ankerräume voneinander trennende Wandung gleichzeitig die Funktion eines Teiles des den Ventilinnenraum nach außen abdichtenden Ventilgehäuses übernehmen, derart, daß der der Betätigung des Verschlußstückes dienende erste Anker innerhalb des Ventilgehäuses und der der Betätigung der Stellungsanzeige dienende Anker außerhalb des Ventilgehäuses angeordnet ist. Der Verzicht auf die Verwendung von Federbalgabdichtungen bei Magnetventilen ist häufig erwünscht, da mit der Betätigung der Magnete harte Anschlagstöße verbunden sind, die die Lebensdauer von Federbälgen beeinträchtigen. Außerdem benötigen mit Federbälgen ausgerüstete Abdichtungen relativ große Magnetkräfte, die die zusätzliche Belastung infolge des Atmosphärendruckes überwinden können. Die erfindungsgemäße Lösung stellt deshalb eine besonders vorteilhafte Lösung für federbalglose gekapselte Ausführungen von Magnetventilen dar.

Weitere Vorteile und Einzelheiten der Erfindung sollen anhand eines in der Figur dargestellten Ausführungsbeispieles erläutert werden. Die Figur zeigt ein magnetisch betätigbares Eckventil 1. Die Anschlußstutzen sind mit 2 und 3, der Ventilsitz mit 4, der Ventilteller mit 5 und der Ventilstempel mit 6 bezeichnet. Das dem Ventilteller 5 gegenüberliegende Ende des Ventilstempels 6 bildet einen Anker 7, der innerhalb des Ankerraumes 8 der Spule 9 angeordnet ist. Über den Anschluß 10 erfolgt die elektrische Versorgung der Spule 9. Das Ventil ist in seiner Schließstellung dargestellt. In dieser Stellung steht der Ventilteller 5 unter der Wirkung der Druckfeder 11. Die Spule 9 ist dann stromlos.

Um das Ventil zu öffnen, wird die Spule 9 kurzzeitig übererregt, um die Kraft der Feder 11 überwinden zu können. Nach dem Anschlagen des Ankers 7 am Anschlagkörper 12 geht die Übererregung der Spule 9 in eine solche Erregung über, die ausreicht, den Anker 7 in seiner Offenstellung zu halten.

Das Innere des Ventils 1 ist gekapselt. Dazu ist zunächst das mit den Anschlußstutzen 2 und 3 ausgerüstete Gehäuseteil 14 vorgesehen. Dieses ist vakuumdicht mit dem Flansch 15 verbunden, der seinerseits mit einem den Ankerraum 8 der Spule 9 bildenden Führungsrohr 16 für den Anker 7 dicht verbunden ist. Der in den Ankerraum 8 der Spule 9 hineinragende etwa zylindrische Anschlagkörper 12 bildet den dichten Verschluß dieses Führungsrohres 16 nach außen. Dazu weist der Anschlagkörper 12 eine kragenförmige Erweiterung 17 mit einer Dichtung 18 auf, die mittels der Kappe 19 und einer Verschraubung 21 - dargestellt ist die Befestigungsschraube des Stellungsgebers - dicht auf eine kragenförmige Erweiterung 22 des Führungsrohres 16 gedrückt wird. Die Spule 9 umgibt von außen das Führungsrohr 16.

Der Anschlagkörper 12 weist eine Sackbohrung 24 auf, die einen weiteren Ankerraum für einen zweiten Anker 25 bildet. Der Anker 25 wird von einer kopfartigen Erweiterung eines ferritischen Stiftes 26 gebildet, der in seinem aus der Sackbohrung bzw. dem Ankerraum 24 herausragenden Bereich mit einem Nocken 27 ausgerüstet ist. Mit Hilfe dieses Nockens 27 werden je nach Stellung des Ankers 25 die Mikroschalter 28a und 28b betätigt. Natürlich kann auch ein anderes zu betätigendes Element, z. B. eine optische Anzeige, vorhanden sein.

Der Halterung und Führung des Ankers 25 bzw. des Stiftes 26 dient ein Bügel 29 mit entsprechenden Öffnungen. Zwischen dem Nocken 27 und dem Bügel 29 ist eine weitere Druckfeder 31 vorgesehen, die über den Stift 26 auf den Anker 25 eine Kraft ausübt, die ihn bei stromloser Spule 9 in seine aus der Sackbohrung 24 herausgezogene (dargestellte) Stellung bringt. Der dieser Stellung entsprechende Schaltzustand der Mikroschalter 28a/b entspricht also der Schließstellung des Ventils 1.

Der Durchmesser des Ankers 25 ist wesentlich kleiner (etwa um den Faktor 2) als der Durchmesser des Ankers 7. Bei stromloser Spule 9 befindet er sich etwa in Höhe des oberen Randes der Spule 9, während der Anker 7 etwa die Hälfte des Innenraumes der Spule 9 einnimmt. Bei erregter Spule und offenem Ventil nimmt der Anker 7 ca. zwei Drittel des Innenraumes der Spule 9 ein. Erst dann ist infolge der erzielten Bündelung der Magnetlinien mit Hilfe des Ankers 7 das Magnetfeld im Bereich des Ankers 25 so stark, daß dieser Anker in die Spule hineingezogen wird und dadurch den Mikroschalter 28 betätigt. Sollte also in einem Störfall (z. B. eines Hängenbleibens des Ventiltellers 5 auf dem Sitz 4 trotz erregter Spule 9) das Ventil nicht öffnen, dann wird auch der Anker 25 nicht in die Spule 9 hineingezogen, so daß es zu einer Fehlanzeige nicht kommen kann.

Um die gewünschte Reihenfolge der Betätigung der beiden Anker - zuerst Anker 7, dann Anker 25 - zu erreichen, ist die Gestaltung und Bemessung dés Ankers 25, des ihn umgebenden Bereichs und der Feder 31 von besonderer Bedeutung. Als zweckmäßig haben sich die in der Figur dargestellten Größenverhältnisse ergeben. Die Stirnseite 32 ist zweckmäßigerweise der Sackbohrung 24 angepaßt. Zusätzlich kann durch eine Eindrehung 33 auf der Außenseite des Anschlagkörpers 12 etwa in Höhe des Ankers 25 Einfluß auf den Verlauf der Magnetlinien und damit auf die Kraft, die auf den Anker 25 einwirkt, genommen werden.

Insgesamt stellt die erfindungsgemäße Ventilstellungsanzeige eine sichere und kompakte Einheit dar, die auf der Atmosphärendruckseite des Ventils liegt und deshalb auch nachträglich an Magnetventile anbaubar ist.

LEYBOLD-HERAEUS GMBH

Köln-Bayental

Ventilbetätigungsvorrichtung, vorzugsweise für
Vakuumventile

ANSPRÜCHE

1. Ventilbetätigungsvorrichtung, vorzugsweise für elektromagnetisch betätigbare Vakuumventile, mit einer Spule und
einem in seinem Ankerraum hin- und herbewegbaren Anker,
der mit  dem Verschlußglied in Verbindung steht,
d a d u r c h   g e k e n n z e i chn e t ,  daß der
Spule (9) ein zweiter, der Stellungsanzeige des Ventils
dienender Anker (25) zugeordnet ist.

2. Vorrichtung nach Anspruch 1,   d a d u r c h
g e k e n n z e i c h n e t ,   daß sie so ausgebildet
und bemessen ist, daß bei einer Erregung der Spule (9)
der zweite Anker (25) nur dann angezogen wird, wenn
auch der erste Anker (7) angezogen worden ist.

3. Vorrichtung nach Anspruch 1 oder 2,   d a d u r c h
g e k e n n z e i c h n e t ,   daß der Ankerraum (24)
des zweiten Ankers (25) von außen her zugänglich und vom
Ankerraum (8) des ersten Ankers (7) durch eine Wandung (12) abgetrennt ist.

4. Vorrichtung nach Anspruch 3,   d a d u r c h
g e k e n n z e i c h n e t ,   daß die die Ankerräume
voneinander trennende Wandung (12) Bestandteil des
den Ventilinnenraum nach außen abdichtenden Ventilgehäuses (14, 16) ist.

5. Vorrichtung nach einem der vorhergehenden Ansprüche,
d a d u r c h   g e k e n n z e i c h n e t ,   daß den
Ankern (7, 25) Federn (11, 31) zugeordnet sind, die auf die Anker jeweils eine Kraft ausüben, die der jeweiligen Anziehungskraft bei erregter Spule (9) entgegengesetzt gerichtet ist.

6. Vorrichtung nach einem der vorhergehenden Ansprüche, d a d u r c h g e k e n n z e i c h n e t , daß das Ventil (1) bei in die Spule (9) eingezogenen Ankern (7, 25) seine "Offen"-Stellung hat.

7. Vorrichtung nach einem der vorhergehenden Ansprüche, d a d u r c h g e k e n n z e i c h n e t , daß der Durchmesser des der Ventilbetätigung dienenden Ankers (7) etwa doppelt so groß ist wie der Durchmesser des der Stellungsanzeige dienenden Ankers (25).

8. Vorrichtung nach einem der vorhergehenden Ansprüche, d a d u r c h g e k e n n z e i c h n e t , daß der zweite Anker (25) mit einem Stift (26) ausgerüstet ist, der vorzugsweise mittels eines Nockens (27) der Betätigung eines Schalters (28) oder einer Anzeige dient.

9. Vorrichtung nach einem der vorhergehenden Ansprüche, d a d u r c h g e k e n n z e i c h n e t , daß ein in die Spule (9) hineinragender Anschlagkörper (12) für den ersten Anker (7) mit einer Sackbohrung (24) für den zweiten Anker (25) ausgerüstet ist.

10. Vorrichtung nach Anspruch 9, d a d u r c h g e k e n n z e i c h n e t , daß der zweite Anker (25) von einem kopfförmig erweiterten Abschnitt an einem Stift (26) gebildet wird.

11. Vorrichtung nach Anspruch 9 oder 10, d a d u r c h g e k e n n z e i c h n e t , daß die Stirnseite (32) des zweiten Ankers (25) der Form der Sackbohrung (24) angepaßt ist.

12. Vorrichtung nach Anspruch 9, 10 oder 11, d a d u r c h g e k e n n z e i c h n e t , daß der Anschlagkörper (12) gleichzeitig den dichten Abschluß des Ventilinnenraumes bildet.

13. Vorrichtung nach einem der Ansprüche 9 bis 12, d a d u r c h g e k e n n z e i c h n e t , daß der Anschlagkörper (12) eine im wesentlichen zylindrische Form hat und von außen etwa in Höhe des zweiten Ankers (25) eine Eindrehung (33) aufweist.

14. Vorrichtung nach einem der vorhergehenden Ansprüche, d a d u r c h g e k e n n z e i c h n e t , daß die Spule (9) außerhalb des Ventilgehäuses angeordnet ist.